# EUROPÄISCHE PATENTSCHRIFT

(11) **EP 1 455 583 B1**
(45) Veröffentlichungstag und Bekanntmachung des Hinweises auf die Patenterteilung: **05.04.2006**
(21) Anmeldenummer: 02804836.1
(22) Anmeldetag: 05.12.2002
(51) Int. Cl.: A21C 3/02

(54) **VORRICHTUNG ZUR KONTINUIERLICHEN ERZEUGUNG EINES TEIGBANDES**
DEVICE FOR THE CONTINUOUS PRODUCTION OF A STRIP OF DOUGH
DISPOSITIF DE FABRICATION EN CONTINU D'UNE BANDE DE PATE

(30) Priorität: 17.12.2001 AT 19762001
(43) Veröffentlichungstag der Anmeldung: 15.09.2004
(73) Patentinhaber: König Maschinen Gesellschaft mbH, 8045 Graz (AT)
(72) Erfinder: LAMBAUER, Peter, A-8073 Feldkirchen (AT); SCHMOLLI, Gerhard, A-8584 Hirschegg (AT)
(74) Vertreter: Wildhack, Helmut
(86) Internationale Anmeldenummer: PCT/AT2002/000343
(87) Internationale Veröffentlichungsnummer: WO 2003/051127

(56) Entgegenhaltungen:
- EP-A- 0 372 879
- EP-A- 0 599 326
- EP-A- 0 744 126
- EP-A- 0 808 572
- WO-A-01/08497
- DE-A- 2 250 569
- DE-B- 1 048 843
- DE-C- 838 281
- GB-A- 507 402
- US-A- 2 145 550
- US-A- 2 246 106
- US-A- 2 814 260
- US-A- 3 748 073

## Beschreibung

Die Erfindung bezieht sich auf eine Vorrichtung zur kontinuierlichen Erzeugung eines Teigbandes, dessen Breite ein Vielfaches seiner Dicke beträgt, aus einer Teigmasse, mit einander gegenüberliegenden, länglichen, als Walzen ausgebildeten Führungsorganen für den Teig, die im einstellbaren Abstand voneinander angeordnet sind, wobei der Teig den von diesem Abstand gebildeten Spalt durchläuft, welcher Spalt von zwei Walzensätzen begrenzt ist, deren jeder zumindest zwei Walzen aufweist, so dass der Tag von den in einander entgegengesetzter Umlaufrichtung angetriebenen Walzen von einem Einlaufende der Vorrichtung zu einem Auslaufende derselben geleitet wird, und wobei sich die zwischen einander gegenüberliegenden Walzen gemessene Breite des Spaltes vom Einlaufende zum Auslaufende verringert, und, zumindest eine der Walzen an ihrem Umfang mit einer Profilierung versehen ist, die von mehreren quer zur Längsrichtung der jeweiligen Walze nebeneinander verlaufenden Rillen gebildet ist, welche die Förderung des Teiges durch den Spalt unterstützen.

Eine solche Vorrichtung ist aus US 2,814,260 A bekannt.

Für die Erzeugung zahlreicher Backwaren ist es erforderlich, eine Teigmasse, die kontinuierlich oder portionenweise angeliefert wird, z.B. von einem Kneter, in ein kontinuierliches Teigband umzuformen, dessen Dicke in der Regel gering ist und nur einen geringen Bruchteil der Bandbreite beträgt. Dieses Teigband wird dann weiteren Bearbeitungsvorrichtungen zugeführt. z.B. Einrichtungen, welche das breite Band in schmale Streifen zerschneiden, die dann durch Spreizbänder voneinander getrennt und Formvomchtungen verschiedenster Art zugeführt werden. Bei der Bildung dieses kontinuierlichen Teigbandes muss der Teig schonend behandelt werden, um Backwaren zufriedenstellender. Qualität erhalten zu können. Insbesondere müssen im Teig vorhandene Blasen, insbesondere Gärgase und Luft, erhalten bleiben und eine Teigquetichung vermieden werden.

Diesen Anforderungen genügt die eingangs geschilderte bekannte Vorrichtung nicht

Weiters ist es aus EP 744 126 B bekannt, zu beiden Seiten des Spaltes je einen. Walzensatz anzuordnen, dessen Walzen eine Profilierung haben, die von einem polygonalen Querschnitt der Walzen gebildet ist Letztere Vorrichtung kann zwar ein Teigband einigermaßen konbnuierficher Dicke erzeugen, behandelt jedoch den Teig nicht genügend schonend, weil die den Spalt begrenzenden Führungsorgane periodisch aufeinander zu- bzw. voneinander weg bewegt werden. Bei der Näherung der, einander gegenüberliegenden Führungsorgane wird der Teig gequetscht, und die im Teig vorhandenen Blasen können nur begrenzt nach oben bzw. unten ausweichen. Diese Nachteile gelten in vermehrtem Ausmaß auch für eine weitere bekannte Vorrichtung (US 2,145,550 A), weil der einem einzigen Walzenpaar zugeführte Teig zu einem sehr dünnen Teigblatt ausgewalzt wird, so dass eine Quetschung des Teiges und damit eine Zerstörung der im Teig vorhandenen Blasen nicht zu vermeiden ist.

Die Erfindung setzt sich zur Aufgabe, eine Vorrichtung der eingangs geschilderten Art so zu verbessern, dass der Teig schonender behandelt wird und insbesondere im Teig vorhandene Blasen verschiedenster Art erhalten bleiben. Die Erfindung löst diese Aufgabe dadurch, dass die Walzen jedes Watzensatzes entsprechend der Spaltverengung gegen das Auslaufende hin zunehmende Umfangsgeschwindigkeit haben und alle Walzen mit der Profilierung versehen sind, so dass die Rillen eine Auswelchmögllchkeit für Blasen bilden, die im Teig vorhanden sind, die Blasen jedoch im Teig erhalten. Diese Ausweichmögifchkeit besteht zunächst in Längsrichtung des Spaltes, also in Richtung vom Einlaufende der Vorrichtung zum Auslaufende derselben, aber zusätzlich hierzu auch seitlich, also in Längsrichtung der Walzen, entsprechend der Gestaltung und dem Verlauf der Rillen. Es hat sich gezeigt, dass dadurch eine besonders schonende Teigbanderzeugung möglich ist, sodass ein Teigband mit hoher Teigqualität der weiteren Teigbearbeitung zugeführt werden kann. Die Einstellbarkeit der Spaltbreite ermöglicht eine weitgehende Anpassung an unterschiedliche Qualitäten des zu verarbeitenden Teiges und die zunehmende Umfangsgeschwindigkeit der Walzen gegen das Auslaufende des Spaltes vermeidet eine durch die Spaltverengung hervorgerufene Teigquetschung.

Ein weiterer Vorteil des Erfindungsgegenstandes ist, dass die bei der zuvor erwähnten bekannten Konstruktion vorliegende periodische Bewegung der Walzen quer zur Längsrichtung des Spaltes entfällt, was zur Vereinfachung der Konstruktion und damit zur Kosteneinsparung beiträgt.

Aus EP 599326 A1 sind zwar auf den Teig einwirkende Walzen bekannt, welche normal zur Walzenlängsrichtung verlaufende Rillen aufweisen. Diese Walzen sind jedoch nicht angetrieben und dienen zur Herstellung einer Struktur auf der Oberfläche des Teigbandes. Die zu beiden Seiten des Teigbandes angeordneten Walzen des Walzenpaares sind einander so nahe benachbart angeordnet, dass die von den Rillen gebildeten Profilierungen der beiden Walzen verzahnungsartig ineinander greifen. Eine derartige Anordnung steht einer Ausweichmöglichkeit für im Teig vorhandene Blasen entgegen.

Gemäß einer bevorzugten Ausführungsform der Erfindung verlaufen die Rillen zueinander parallel bzw. um den Umfang des Führungsorganes in sich geschlossen. Eine besonders einfache und übersichtliche Konstruktion ergibt sich bei senkrecht zur Längsrichtung des Führungsorganes verlaufenden Rillen, obwohl auch gewindeartig verlaufende Rillen den eingangs erwähnten Anforderungen genügen.

Gemäß einer Weiterbildung der Erfindung können in zumindest einigen der zwischen benachbarten Rillen bestehenden. Stegen Nuten vorgesehen sein, deren Richtung sich mit der Richtung der Rillen kreuzt. Diese Nuten bilden einen zusätzlichen Freiraum für das Ausweichen von Gasblasen und verhindem außerdem das Durchrutschen des Teiges in Längsrichtung des Spaltes, wenn diese Längsrichtung geneigt oder vertikal verläuft.

Wenngleich in den meisten Fällen die Anordnung des Spaltes so sein wird, dass seins Achse vertikal verläuft, so ist die Erfindung nicht darauf beschränkt, Vielmehr kann der Spalt vom Einlaufende zum Auslaufende schräg oder horizontal verlaufen.

Die Walzen können unterschiedliche Profile und bzw. oder Rillen und bzw. oder Größen haben und es können die Führungsorgane Bestandteile von Einrichtungen sein, weiche Substanzen auf dem Teig aufbringen, z.B. Öl, eine Bemehlung, eine Bestreuung usw.

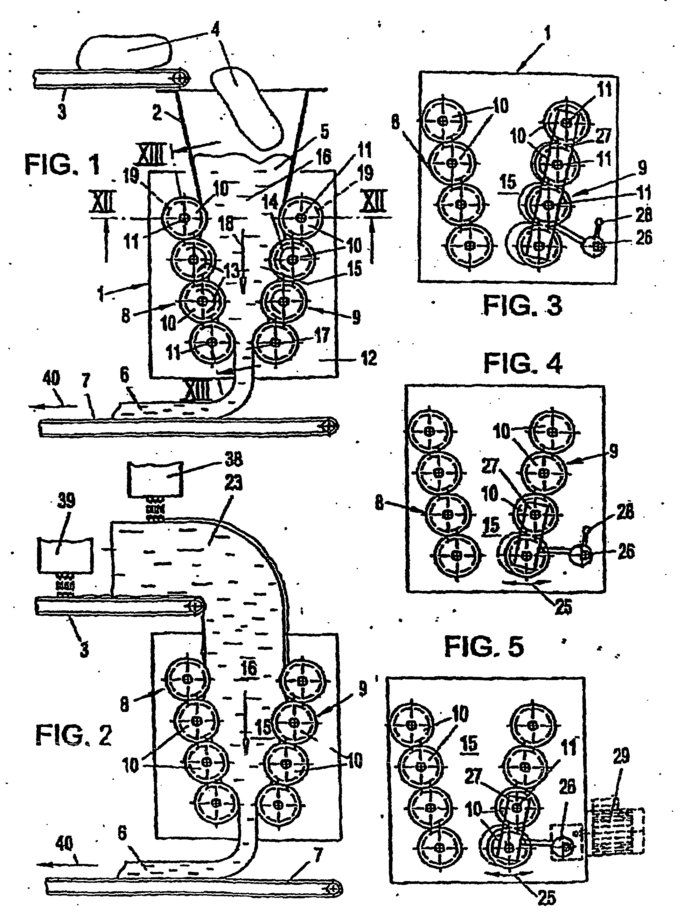

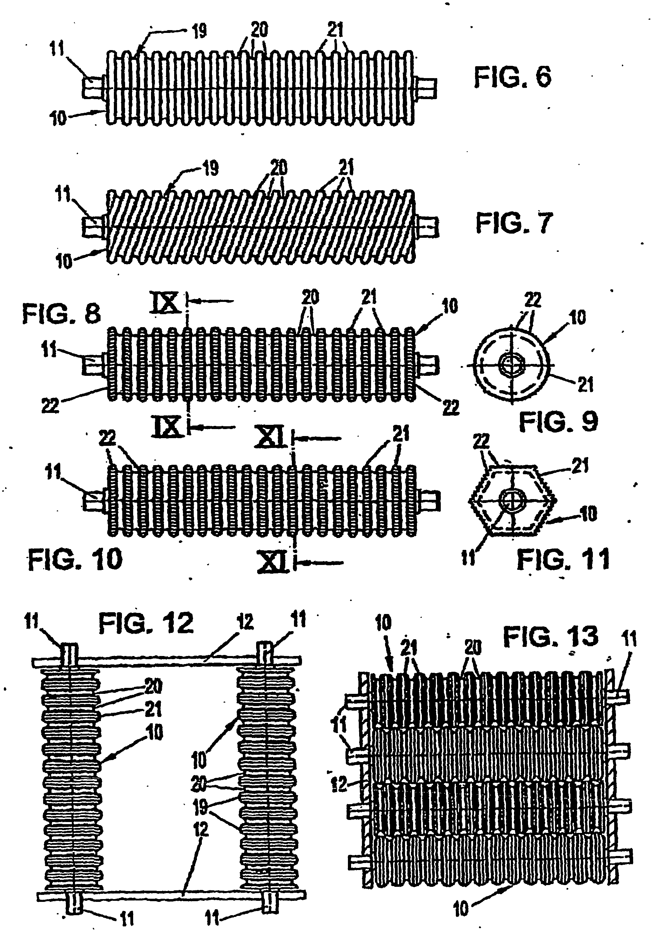

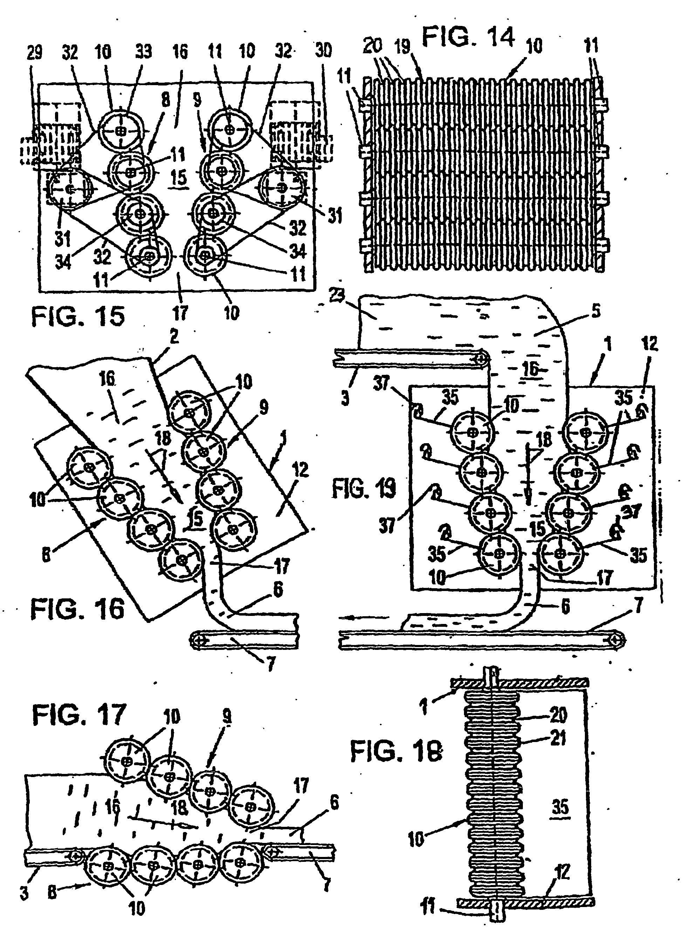

Weitere Kennzeichen und Vorteile der Erfindung ergeben sich aus der Beschreibung von Ausführungsbeispielen, welche in der Zeichnung schematisch dargestellt sind. Fig. 1 zeigt ein erstes Ausführungsbeispiel der Erfindung im Längsschnitt. Fig. 2 zeigt eine Ausführungsform mit einer Bestäubung des zugeführten Teigstranges. Fig. 3 zeigt die Einstellung, der Breite eines Walzrenspaltes, der von zwei Walzensätzen begrenzt ist. Die Fig. 4 und 5 zeigen Ausführungsvarianten zu Fig. 3. Fig. 6 zeigt die Ausbildung der Rillen an einer Walze. Fig. 7 zeigt eine Ausführungsvariante zu Fig. 6. Die Fig. 8 und 10 zeigen weitere Ausführungsvarianten, und die Fig. 9 und 11 sind Schnitte nach den Linien IX bis IX der Fig. 8 bzw, X1 bis XI der Fig. 10. Fig. 12 zeigt in größerem Maßstab einen Schnitt nach der Linie XII bis XII der Fig. 1. Fig. 13 zeigt in einem Schnitt nach der Linie XIII bis XIII der Fig. 1 eine Ausführungsvariante. Fig. 14 ist eine Ausführungsvariante zu Fig. 13 mit kämmender Anordnung der Walzenrillen. Fig. 15 zeigt eine Ausführungsform für den Antrieb der Walzen mit unterschiedlicher Umlaufgeschwindlgkeit. Die Fig. 16 und 17 zeigen Ausführungsvarianten mit schräg verlaufendem bzw. Im Wesentlichen horizontal verlaufendem Walzenspalt. Fig. 18 zeigt im Schnitt eine Ausführungsform mit den Walzen zugeordneten Abstreifern. Fig. 19 zeigt eine Ausführungsform mit beölten Walzen.

Bei der Ausführungsform nach Fig. 1 hat die Vorrichtung ein Gestell 1, welches oben einen Trichter 2 für die Einfüllung des zu verarbeitenden Teiges aufweist. Dieser Teig Wird bei dieser Ausführungsform mittels eines Förderbandes 3 in Form von Teigportionen 4 zugefürt. Im Trichter 2 bilden diese Teigportionen 4 eine Teigmasse 5, aus der ein dünnes Teigband 6 geformt wird, das auf ein Abförderband 7 abgelegt und durch dieses Förderband 7 in Richtung des Pfeiles. 40 abgeführt wird. Die Umformung der Teigmasse 5 zum dünnen Teigband 6 erfolgt mittels zweier Sätze von Führungsorganen 8. 9. Jeder Führungsorgansatz ist von vier längllchen Walzen 10 gebildet, die mit zueinander parallelen Achsen 11 in zwei an den Stimenden der Walzen 10 verlaufenden Seitenwänden 12 des Gestelles 1 drehbar gelagert sind. Diese Walzen 10 stellen ein Teigband 6 her. dessen Breite ein Vielfaches seiner Dicke beträgt. Die Walzen 10 jedes Führungsorgansatzes sind jeweils in der gleichen Richtung angetrieben, für die beiden Führungsorgansätze jedoch gegensinnig in Richtung der Pfeile 13,14. Alle Walzen 10 der beiden Sätze von Führungsorganen 8, 9 sind gleich groß, jedoch mit ihren Achsen 11 so angeordnet, dass sich der Spalt 15 zwischen einander gegenüberliegenden Walzen 10 vom Einlaufende 16 der beiden Führungsorgansätze 8, 9 zum Auslaufende 17 derselben trichterartig verschmälert, wobei jedoch die in Richtung der Achsen 11 der Walzen 10 gemessene Breite des erzeugten Teigbandes 6 konstant bleibt Die erwähnte Drehung der Walzen 10 in Richtung der Pfeile 13 bzw. 14 bewirkt eine Förderung des Teiges durch den Spalt 15 in Richtung des Pfeiles 18. Diese Forderung wird noch dadurch unterstützt, dass die Walzen an ihrem Umfang mit einer Profilierung 19 (Fig. 6) versehen sind, die von mehreren quer zur Längsrichtung, das heißt quer zur Richtung der Achsen 11 der Walzen 10 nebeneinander verlaufenden Rillen 20 gebildet ist. Bei der Ausführungsform nach Fig. 6 verlaufen diese Rillen 20 zueinander parallel um den Umfang der Walze 10 in Form in sich geschlossener Ringe, die in Ebenen liegen, die normal auf die Achse 11 der Walze 10 verlaufen. Diese Rillen bilden zugleich einen Auswelchraum für in der verarbeiteten Teigmasse 5 befindlichen Gärgas- oder Luftblasen, deren Erhaltung im Sinne einer hohen Teigqualität erwünscht ist. Eine Quetschung des Teiges und eine Zerstörung dieser Gasblasen ist daher vermieden. Die von den Rillen 20 gebildeten Ausweichräume ermöglichen sowohl eine seitliche Ausweichung der Gasblasen in Richtung der Achsen 11 der Walzen 10, also von den die Rillen 20 begrenzenden Stegen 21 In die von den Rillen 20 gebildeten Hohiräume, als auch eine Ausweichmöglichkeit in Längsrichtung des Spaltes 15, also in Förderrichtung 18 des Teiges oder entgegengesetzt dazu, also entlang der von den Rillen 20 gebildeten ringförmigen Hohlräume.

Die Rillen müssen jedoch nicht in normal auf die Achse 11 stehenden Ebenen verlaufen. Wie Fig. 7 zeigt, ist auch eine gewindeartige Anordnung der Rillen 20 möglich und Im Sinne der Erfindung sinnvoll.

Eine weitere Unterstützung der Förderwirkung der Walzen 10 auf den Teig 5 lässt sich dadurch erzielen, dass in zumindest einigen der zwischen benachbarten Rillen 20 bestehenden Stege 21 Nuten 22 (Fig. 8) vorgesehen sind, die parallel zu der Achse 11 oder auch schräg dazu verlaufen können. Diese Nuten 22 geben dem Umfang der Stege 21 den Charakter einer Randrierung, welche die erwähnte zusätzliche Förderwirkung unterstützt und ein Durchrutschen des Teiges zwischen den Walzen 10 in Richtung des Pfeiles 18 verhindert.

In der Regel, jedoch nicht zwingend, sind die Walzen 10 jedes Satzes so angeordnet, dass sie sich mit ihren äußersten Umfangsteilen gerade berühren (Fig. 1). Dadurch wird ein Ausfließen des Teiges 5 zwischen einander benachbarten Walzen 10 verhindert. Von dieser einander berührenden Anordnung wird jedoch dann abgegangen, wenn das Profil der Walzen 10 nicht kreisrund ist, wofür die Fig. 10 und 11 ein Ausführungsbeispiel zeigen, bei weichem die Stege 21 ebenfalls mit quer zur Umfangsrichtung verlaufenden Nuten 22 versehen sind. Dieses Ausführungsbeispiel zeigt einen sechseckigen Querschnitt der Stege 21, gesehen in Richtung der Achse 11. Andere geeignete Quorschnittsfotmen sind denkbar, insbesondere polygonale Querschnitte mit mehr als sechs Seiten oder ovale Querschnitte. Bei istzteren ergibt sich bei fix gelagerten Achsen 11 der einander gegenüberliegenden Walzen 10 jedoch dann eine periodische Verengung bzw. Erweiterung des zwischen einander gegenüberliegenden Walzen 10 bestehenden Spaltes 15, wenn die beiden einander gegenüberliegenden Walzen 10 mit gleicher Umfangsgeschwindigkeit umlaufen, gleich groß sind und sich die Berge bzw. Täler des ovalen Walzenquerschnittes begegnen. Dies könnte zu einer periodischen Quetschung des Teiges führen. Um dies zu vermeiden, kann bei einem oval gewählten Waizenquerschnitt die Drehung der Walzen 10 so getroffen sein, dass jeweils ein Tal des ovalen Watzenquerschnittes der einen Walze 10 dem Spalt 15 benachbart ist, wenn für die andere Walze 10 der Berg des ovalen Walzenquerschnittes dem Spalt 15 benachbart ist. Auf diese Weise lässt sich zumindest eine im Wesentlichen konstante Breite des Spaltes 15 zwischen den beiden einander gegenüberliegenden Walzen 10 sicherstellen.

Die Zuführung des zu verarbeitenden Teiges muss nicht in Form von Teigportionen 4 geschehen, wie dies Fig. 1 zeigt. Es ist vielmehr durchaus Möglich, den zu verarbeitenden Teig in form eines bereits vorgeformten Teigbandes 23 (Fig. 19) zuzuführen.

Die Breite des Spaltes 15 ist einstellbar, um sich an unterschiedliche Teigqualitäten anpassen zu können. Hiezu kann die Achse 11 der einen Walze 10 des Walzenpaares in Querstücken gelagert sein, die relativ zum Gestell 1 verschiebbar angeordnet sind, wobei zur Verschiebung und somit zur Spalteinstellung ein Exzentertrieb dient Eine solche Verstellung der wirksamen Breite des Spaltes 15 lässt sich natürlich auch für Sätze von einander gegenüberliegenden Walzen durchführen. Fig. 3 zeigt eine Ausführungsform bei welcher der trichterförmig verlaufende Spalt 15 von vier Paaren von Walzen 10 begrenzt ist Die Walzen 10 des rechten Führungsorgansatzes 9 sind mit ihren Achsen 11 auf eigenen Schildem 27 gelagert, und die Schilder sind um die oberste Achse 11 relativ zum Gestell 1 schwenkbar angeordnet Die Verstellung erfolgt mittels eines Exzentertriebes 26.

Fig. 4 zeigt eine Ausführungsvariante hiezu, wo nur die unterste Walze 10 des rechten Walzensatzes zur Einstellung der Breite des Spaltes 15 verstellbar ist.

Während die Fig. 3 und 4 eine händische Verstellung des Exzentertriebes 26 mittels eines Handhebels 28 zeigen, Ist bei der Ausführungsform nach Fig. 5 für die Verstellung des Exzentertriebes 26 ein Motor 29 vorgesehen, der in geeigneter Weise gesteuert wird. Ein solcher Motor lässt sich selbstverständlich für jede Art der Verstellung des Walzuspaltes einsetzen.

Die Fig. 6 und 7 zeigen ein abgerundetes Profil der Stege 21, dieses Profil kann jedoch abgeflacht sein, wie der Schnitt nach Fig. 12 zeigt. Femer müssen die Walzen der Führungsorgansätze 8, 9 und/oder die einander in Bezug auf den Spalt 15 gegenüberliegenden Walzen 10 einander nicht gleich sein, es können vielmehr auch Walzen unterschiedlicher: Ausführung kombiniert werden, insbesondere Walzen unberschiedllcher Durchmesser.

Ferner ist es, wie Fig. 13 zeigt, auch möglich, die Rillen 20 einander benachbarter Walzen 10 in Richtung der Walzenachsen 11 versetzt anzuordnen, und es können bei jeder Ausführungsform verschiedenste Rillenformen miteinander kombiniert werden.

Wie Fig. 14 zeigt, können die Rillen 20 benachbarter Walzen 10 eines Satzes 8 bzw. 9 so beschaffen und die einzeinen Achsen 11 benachbarter Walzen 10 dieses Satzes einander so nahe angeordnet sein, dass sich eine kämmende Anordnung der Rillen 20 bzw. der sie begrenzenden Stege 21 ergibt. Dies trägt auch zur Selbstreinigung der Walzen 10 bei.

Der Antrieb der Walzen 10 zur Drehbewegung kann durch geeignete Getriebe von einem gemeinsamen Motor aus erfolgen. Fig. 15 zeigt jedoch eine Ausführungsvariante, wo für jeden der beiden Walzensätze 8, 9 ein eigener Motor 29 bzw. 30 vorgesehen ist. Jeder Motor 29 bzw. 30 treibt ein Antriebskettenrad 31 an, von welchem Ketten 32 zu Antriebsritzeln 33, 34 führen, die mit den Achsen 11 der einzelnen Rollen 10 drehschlüssig verbunden sind. Dies ermöglicht es in einfacher Weise, die einzelnen Walzen jedes Walzensatzes 8 bzw. 9 mit unterschiedlicher Umfangsgeschwindigkeit anzutrelben. Es genügt hiezu, die Antriebsritzel 33, 34 unterschiedlich groß auszubilden. Zweckmäßig ist die Anordnung so getroffen, dass die Drehzahl der Walzen 10 vom Einlaufende 16 des Spaltes 15 zum Auslaufende 17 desselben ansteigt, und zwar entsprechend der Querschnittsverengung des Spaltes 15. Gegebenenfalls können einander gisgenüberdegende Walzen 10 auch unterschiedliche Drehzahlen aufweisen.

In Fig. 15 ist die Anordnung so gewählt, dass die Drehzahl der Walzen 10 jedes Welzensatzes 8 bzw. 9 von oben nach unten stufenweise zunimmt. Es kann jedoch auch die Anordnung so getroffen sein, dass beispielsweise die beiden obersten Antriebsritzel 33 jedes Walzensatzes gleich groß sind und ebenso die beiden untersten Antriebsritzel 34, wobei letztere jedoch kleiner sind als die Antriebsritzel 33. Auf diese Weise ergibt sich eine gröbere stufenweise Erhöhung der Drehzahl von oben nach unten.

Die Vorrichtung muss nicht so ausgebildet sein, dass der zwischen den Walzensätzen 8, 9 verbleibende Spalt 15 vertikal oder fast vertikal verläuft. Vielmehr ist es durchaus möglich, diesen Spalt 15 auch mit schräger Achse anzuordnen, wie dies Fig. 16 zeigt. Auch eine Anordnung nach Fig. 17 ist möglich, bei welcher das Einlaufende 16 und das Auslaufende 17 des Spaltes 15 fast oder völlig auf gleicher Höhe liegen. Bei einer solchen Ausführungsform wird der zu verarbeitende Teig zweckmäßig mittels eines Förderbandes 3 zugeführt, während bei der Ausführungsform nach Fig. 16 auch die Zuführung mittels eines Trichters 2 möglich ist.

Den einander gegenübediegenden Walzen 10 kann Jeweils ein Abstreifer 35 (Fig. 18) zugeordnet sein, dessen der jeweiligen Walze 10 benachbarte Kante entsprechend der Rillenform geformt ist, so dass der Abstreifer 35 verzahnungsartig mit den Stegen 21 bzw. Rillen 20 der Walze 10 kämmt. Schräg angeordnet und mit Mehl 36 beaufschlagt, können diese Abstreifer 35 auch einen Bauteil einer Bemehlungseinrichtung für die Rillenwalzen 10 bilden.

Ähnlich ausgebildete Abstreifer 35 zeigt die Ausführungsform nach Fig. 19, wobei jeweils ein Abstreifer 35 einer der Walzen 10 jedes Walzensatzes 8 bzw. 9 zugeordnet ist Jedem der Abstreifer 35 ist ein Tropföler 37 zugeordnet, der Öl tropfenweise auf den Abstreifer 35 aufbringt von wo das Öl zur benachbarten Walze 10 strömt Auf diese Weise ist eine Beölung der Walzen 10 bzw. des von ihnen geführten Teiges möglich.

Statt mittels Abstreifem 35 kann eine Beölung des Teiges auch mittels Verteilerwalzen oder Bürsten erfolgen.

Fig. 2 zeigt eine Ausführungsform, bei weicher der zugeführte vorgeformte Teigstrang 23 von oben und unten bestaubt wird, wofür zwei Bestaubungseinrichtungen 38, 39 vorgesehen sind. Die Bestaubungseinrichtung 38 bringt Mehl auf die Oberfläche des schon am Förderband 3 liegenden Teigstrang 23 auf, wogegen die Bestaubungseinrichtung 39 das Förderband 3 bemehlt, bevor noch der Teigstrang 23 auf das Förderband aufgelegt wird. Auf diese Weise fließt ein beidseitig bemehlter Teigstrang am Einlaufende 16 des zwischen den beiden Walzensätzen 8, 9 bestehenden Spaltes 15 in diesen in Pfellrtchtung 18 hinein. Die Ablegung des durch das unterste Walzenpaar 10 auf die gewünschte Form gebrachten Teigbandes 6 erfolgt wieder koneuieruch auf ein kontinuierlich" umlaufendes Abförder13and 7; das in Fachtung des Pfeiles 40 umläuft. Die beidseitige Bestaubung des zugeführten Teigstranges 23 verhindert ein Kleben des weichen Teiges an den Walzen 10.

In ähnlicher Weise kann statt einer Bemehlungseinrichtung auch eine Beötungseinrichtung aufgebaut sein.

## Patentansprüche

1. Vorrichtung zur kontinuierlichen Erzeugung eines Teigbandes (6), dessen Breite ein ,Vielfaches seiner Dicke beträgt, aus einer Teigmasse (5), mit einander gegenüberliegenden, länglichen, als Walzen (10) ausgebildeten Führungsorganen (8, 9) für den Teig, die im einstellbaren Abstand voneinander angeordnet sind, wobei der Teig den von diesem Abstand gebildeten Spalt (15) durchläuft, welcher Spalt (15) von zwei Walzensätzen begrenzt ist, deren jeder zumindest zwei Walzen (10) aufweist, so dass der Teig von den in einander entgegengesetzter Umlaufrichtung angetriebenen Walzen (10) von eirtem Einlaufende (16) der Vorrichtung zu einem Auslaufende (17) derselben geleitet wird, und wobei sich die zwischen einander gegenüberliegenden Walzen (10) gemessene Breite des Spaltes (15) vom Einlaufende (16) zum Auslaufende (17) verringert, und zumindest eine der Walzen (10) an ihrem Umfang mit einer Profilierung (19) versehen ist, die von mehreren quer zur Längsrichtung der jeweiligen Walze (10) nebeneinander verlaufenden Rillen (20) gebildet ist, welche die Förderung des Teiges durch den Spalt (15) unterstützen, **dadurch gekennzeichnet, dass** die Walzen(10) jedes Walzensatzes (8, 9) entsprechend der Spaltverengung gegen das Auslaufende (17) zunehmende Umfangsgeschwindigkeit haben und alle Walzen (10) mit der Profilierung (19) versehen sind, so dass die Rillen (20) eine Ausweichmöglichkeit für Blasen bilden, die im Teig (5) vorhanden sind, die Blasen jedoch im Teig erhalten.

2. Vorrichtung nach Anspruch 1, **dadurch gekennzeichnet, dass** die Rillen (20) zueinander parallel verlaufen.

3. Vorrichtung nach Anspruch 1 oder 2, **dadurch gekennzeichnet, dass** die Rillen (20) um den Umfang des Führungsorganes (8, 9) in sich geschlossen verlaufen.

4. Vorrichtung nach Anspruch 3, **dadurch gekennzeichnet, dass** die Rülen (20) normal zur Längsrichtung des Führungsorganes (8, 9) verlaufen.

5. Vorrichtung nach Anspruch 1 oder 2, **dadurch gekennzeichnet, dass** die Rillen (20) gewindeartig verlaufen.

6. Vorrichtung nach einem der Ansprüche 1 bis 5, **dadurch gekennzeichnet, dass** in zumindest einigen der zwischen benachbarten Rillen (20) bestehenden Stege (21) Nuten (22) vorgesehen sind, deren Richtung sich mit der Richtung der Rillen (20) kreuzt.

7. Vorrichtung nach einem der Anspruche 1 bis 6, **dadurch gekennzeichnet, dass** die Breite des Spaltes (15) nur über einen Teil seiner vom Einlaufende (16) zum Auslaufende (17) gemessenen Länge einstellbar ist.

8. Vorrichtung nach einem der Ansprüche 1 bis 7, **dadurch gekennzeichnet, dass** zur Einstellung der Spaltbreite zumindest ein Exzentertrieb (26) und/oder zumindest eine mötorische Verstetleinrichtung (29, 30) vorgesehen ist

9. Vorrichtung nach einem der Ansprüche 1 bis 8, **dadurch gekennzeichnet, dass** der Spalt (15) vom Einlaufende (16) zum Auslaufende (17) schräg oder horizontal vertäuft.

10. Vorrichtung nach einem der Ansprüche 1 bis 9, **dadurch gekennzeichnet, dass** die Walzen (10) unterschiedliche Profile undloder unterschiedliche Rillen und/oder unterschiedliche Größen haben.

11. Vorrichtung nach einem der Ansprüche 1 bis 10, **dadurch gekennzeichnet, dass** die Rillen (20) benachbarter Walzen (10) eines Walzensatzes (8, 9) relativ zueinander versetzt sind.

12. Vorrichtung nach Anspruch 11, **dadurch gekennzeichnet, dass** die die Rillen (20) begrenzenden Stege (21) benachbarter Watzen (10) des Walzensatzes (8, 9) miteinander kämmen.

13. Vorrichtung nach einem der Ansprüche 1 bis 12, **dadurch gekennzeichnet, dass** zumindest einer Walze (10) ein Abstreifer (35) zugeordnet ist, der gegebenenfalls einen Bauteil einer Einrichtung zur Bemehlung, Bestreuung oder Beölung bildet und vorzugsweise mit den Rillen (20) der Walze (10) kämmt

14. Vorrichtung nach einem der Ansprüche 1 bis 13, **dadurch gekennzeichnet, dass** zumindest eine Walze (10) einen Bauteil einer Einrichtung' zur Bemehlung, Bestreuung oder Beölung bildet.

15. Vorrichtung nach einem der Ansprüche 1 bis 14, **dadurch gekennzeichnet, dass** an jedem Walzensatz ein Ausfließen des Teiges zwischen einander benachbarten Walzen (10) **dadurch** verhindert ist, dass sich die Walzen (10) mit ihren äußersten Umfangsteilen berühren.

## Claims

1. Device for continuous production of a strip (6) of dough, the width of which is a multiple of its thickness, from a mass (5) of dough, with oblong guide elements (8, 9) for the dough, located opposite one another, constructed as rollers (10) and arranged at an adjustable distance from one another, wherein the dough passes through the gap (15) formed by this distance, the gap (15) being limited by two sets of rollers, each of which has at least two rollers (10), so the dough is conducted by the rollers (10), driven in opposite directions of rotation from one another, from an intake end (16) of the device to an outlet end (17) thereof, and wherein the width of the gap (15), measured between rollers (10) located opposite one another, reduces from the intake end (16) to the outlet end (17) and at least one of the rollers (10) is provided on its circumference with profiling (19) formed of several grooves (20) running next to one another crosswise to the longitudinal direction of the respective roller (10) and supporting the conveying of the dough through the gap (15), **characterised in that** the rollers (10) of each set of rollers (8, 9) have an increasing circumferential speed corresponding to the narrowing of the gap towards the outlet end (17) and all the rollers (10) are provided with the profiling (19), so the grooves (20) form a means for bubbles present in the dough to move out of the way, yet maintain the bubbles in the dough.

2. Device according to claim 1, **characterised in that** the grooves (20) run parallel to one another.

3. Device according to claim 1 or 2, **characterised in that** the grooves (20) run, self-contained, round the circumference of the guide element (8, 9).

4. Device according to claim 3, **characterised in that** the grooves (20) run normally to the longitudinal direction of the guiding element (8, 9).

5. Device according to claim 1 or 2, **characterised in that** the grooves (20) run like threads.

6. Device according to one of claims 1 to 5, **characterised in that** in at least some of the webs (21) existing between adjacent grooves (20) channels (22) are provided, the direction of which intersects the direction of the grooves (20).

7. Device according to one of claims 1 to 6, **characterised in that** the width of the gap (15) is adjustable over only part of its length measured from the intake end (16) to the outlet end (17).

8. Device according to one of claims 1 to 7, **characterised in that** at least one eccentric pinion (26) and/or at least one motive adjusting device (29, 30) is provided for adjusting the width of the gap.

9. Device according to one of claims 1 to 8, **characterised in that** the gap (15) runs obliquely or horizontally from the intake end (16) to the outlet end (17).

10. Device according to one of claims 1 to 9, **characterised in that** the rollers (10) have different profiles and/or different grooves and/or different sizes.

11. Device according to one of claims 1 to 10, **characterised in that** the grooves (10) of adjacent rollers (10) of a set of rollers (8, 9) are offset relative to one another.

12. Device according to claim 11, **characterised in that** the webs (21) of adjacent rollers (10) of the set of rollers (8, 9) limiting the grooves (20) mesh with one another.

13. Device according to one of claims 1 to 12, **characterised in that** at least one roller (10) is allocated a scraper (35) which, as applicable, forms a component of a device for adding flour, sprinkling or oiling and preferably meshes with the grooves (20) of the roller (10).

14. Device according to one of claims 1 to 13, **characterised in that** at least one roller (10) forms a component of a device for adding flour, sprinkling or oiling.

15. Device according to one of claims 1 to 14, **characterised in that** on each set of rollers leaking of dough between rollers (10) adjacent to one another is prevented **in that** the rollers (10) touch one another with their outermost circumferential parts.

## Revendications

1. Dispositif de fabrication en continu d'une bande de pâte (6), dont la largeur est un multiple de l'épaisseur et qui est composée d'une masse de pâte (5), avec des organes de guidage (8, 9) de la pâte qui se présentent sous la forme de cylindres oblongs (10) agencés en regard les uns des autres et à distance réglable, la pâte traversant l'emprise (15) correspondant à ladite distance, laquelle emprise (15) est délimitée par deux séries de cylindres comprenant chacune deux cylindres (10) ou plus, de sorte que la pâte est dirigée par les cylindres (10) entraînés dans des sens contraires depuis une extrémité d'entrée (16) du dispositif jusqu'à une extrémité de sortie (17) de ce même dispositif, la largeur de l'emprise (15), mesurée entres les cylindres en regard (10), diminuant depuis l'extrémité d'entrée (16) jusqu'à l'extrémité de sortie (17), et au moins un des cylindres (10) présentant sur son pourtour un profilage (19) formé d'une pluralité de rainures adjacentes (20) perpendiculaires à la direction longitudinale dudit rouleau (10), qui favorisent le transport de la pâte à travers l'emprise (15), **caractérisé en ce que** les cylindres (10) de chaque série de cylindres (8, 9) tournent à des vitesses qui augmentent à mesure que l'emprise diminue en direction de l'extrémité de sortie (17) et **en ce que** tous les cylindres (10) sont pourvus du profilage (19), de manière à ce que les rainures (20) offrent une possibilité d'évitement aux bulles dans la pâte (5) tout en les maintenant dans ladite pâte (5).

2. Dispositif selon la revendication 1, **caractérisé en ce que** les rainures (20) sont parallèles entre elles.

3. Dispositif selon la revendication 1 ou la revendication 2, **caractérisé en ce que** les rainures (20) sont ménagées sur la périphérie de l'organe de guidage (8, 9) de manière à se refermer sur elles-mêmes.

4. Dispositif selon la revendication 3, **caractérisé en ce que** les rainures (20) sont perpendiculaires à l'axe longitudinal de l'organe de guidage (8, 9).

5. Dispositif selon la revendication 1 ou la revendication 2, **caractérisé en ce que** les rainures (20) s'étendent de manière hélicoïdale.

6. Dispositif selon l'une quelconque des revendications 1 à 5, **caractérisé en ce que** dans quelques-unes au moins des parties pleines (21) présentes entre des rainures voisines (20) sont prévues des gorges (22) dont le tracé croise celui des rainures (20).

7. Dispositif selon l'une quelconque des revendications 1 à 6, **caractérisé en ce que** la largeur de l'emprise (15) est réglable sur une partie seulement de sa longueur, mesurée de son extrémité d'entrée (16) vers son extrémité de sortie (17).

8. Dispositif selon l'une des revendications 1 à 7, **caractérisé en ce qu'**il est prévu au moins un entraînement excentrique (26) et/ou au moins un dispositif de réglage motorisé (29, 30) pour régler la largeur de l'emprise.

9. Dispositif selon l'une quelconque des revendications 1 à 8, **caractérisé en ce que** l'emprise (15) s'étend en oblique ou horizontalement entre l'extrémité d'entrée (16) et l'extrémité de sortie (17).

10. Dispositif selon l'une quelconque des revendications 1 à 9, **caractérisé en ce que** les cylindres (10) ont différents profils et/ou différentes rainures et/ou différentes tailles.

11. Dispositif selon l'une quelconque des revendications 1 à 10, **caractérisé en ce que** les rainures (20) de cylindres voisins (10) d'une série de cylindres (8, 9) sont décalées les unes par rapport aux autres.

12. Dispositif selon la revendication 11, **caractérisé en ce que** les parties pleines (21) délimitant les rainures (20) sur des cylindres voisins (10) de la série de cylindres (8, 9) s'engrènent.

13. Dispositif selon l'une quelconque des revendications 1 à 12, **caractérisé en ce qu'**à au moins un cylindre (10) est associé un racloir (35) qui fait éventuellement partie d'un dispositif de farinage, de saupoudrage ou d'huilage et s'engrène de préférence avec les rainures (20) du cylindre (10).

14. Dispositif selon l'une quelconque des revendications 1 à 13, **caractérisé en ce qu'**au moins un rouleau (10) fait partie d'un dispositif de farinage, de saupoudrage ou d'huilage.

15. Dispositif selon l'une quelconque des revendications 1 à 14, **caractérisé en ce que** sur chaque série de cylindres, la pâte est empêchée de s'échapper entre des cylindres voisins (10) grâce au fait que les cylindres (10) sont jointifs au niveau de leurs périphéries externes.
